# EUROPEAN PATENT SPECIFICATION

(11) **EP 4 067 037 B1**
(45) Date of publication and mention of the grant of the patent: **17.04.2024**
(21) Application number: 21166590.6
(22) Date of filing: 01.04.2021
(51) Int. Cl.: B29B 11/16, B29C 31/00, B29C 33/34, B29C 33/30

(54) **METHOD FOR MANUFACTURING PREFORMS FOR A WIND TURBINE BLADE, MANUFACTURING ARRANGEMENT FOR MANUFACTURING PREFORMS FOR A WIND TURBINE BLADE, AND MOULD FOR A MANUFACTURING ARRANGEMENT**
VERFAHREN ZUR HERSTELLUNG VON VORFORMEN FÜR EINE WINDTURBINENSCHAUFEL, VERFAHREN ZUR HERSTELLUNG VON VORFORMEN FÜR EINE WINDTURBINENSCHAUFEL UND FORM FÜR EINE HERSTELLUNGSANORDNUNG
PROCÉDÉ DE FABRICATION DE PRÉFORMES POUR UNE PALE D'ÉOLIENNE, AGENCEMENT DE FABRICATION DE PRÉFORMES POUR UNE PALE D'ÉOLIENNE, ET MOULE POUR UN AGENCEMENT DE FABRICATION

(43) Date of publication of application: 05.10.2022
(73) Proprietor: Siemens Gamesa Renewable Energy A/S, 7330 Brande (DK)
(72) Inventor: Nielsen, Anette Struve, 8464 Galten (DK); Nielsen, Mogens, 9220 Aalborg (DK)
(74) Representative: SGRE-Association

(56) References cited:
- WO-A1-2019/115337
- WO-A1-2019/115522

## Description

The invention refers to a method for manufacturing preforms for a wind turbine blade.

As commonly known, a wind turbine comprises among others several turbine blades attached to a hub. The blades interact with the wind making the hub rotate. To the hub a generator is coupled, which is driven by the rotating hub. The turbine blades of nowadays turbines have enormous dimensions in length and width. Their manufacturing is therefore difficult, as big parts need to be handled. One technology for producing such large blades uses preforms, which are preformed smaller blade parts used for building the respective blade shell. These prefabricated preforms are arranged and aligned according to the requested overall geometry of the blade and are finally connected respectively embedded in fiber mats and resin etc. for manufacturing the final large blade or blade part.

Each preform, which usually has a slightly bended geometry with a length of for example 10 - 12 m and a width of for example 3 - 5 m, is prefabricated in a specific mould. The mould comprises a respective form part, in which the preform building elements like fiber mats and a binding agent and, optionally, core elements, are arranged. These elements are consolidated in the respective mould part by applying a vacuum, which mould part has a defined geometry corresponding to the requested blade geometry. For this consolidation the preform building elements are covered with for example a foil, so that the vacuum can be applied to the space between the foil and the mould part, in which the building elements are arranged. Afterwards heat is supplied to the building elements in order to melt the locally positioned binding agent for locally fixing the fiber mats and the core elements etc. by gluing them in the binder matrix provided by the molten binding agent. After this heating operation the preform needs to be cooled to room temperature, whereafter it is sufficiently stable to be handled by a crane equipment or any other comparable handling or lifting means, usually a vacuum suction lifting equipment.

This way of producing the preforms is quite cumbersome. The moulds used for producing the preforms are very complicated in their set-up, especially as a heating and cooling system needs to be provided in every mould. This makes the mould very expensive, having in mind that a large number of separate moulds is necessary, as usually at least twenty or more preforms are needed for producing a blade or blade part. Further, as the respective mould geometry is designed for a respective geometry of the preform, an extensive reworking of the mould is necessary, when the preform geometry shall be changed, entailing also the adaption of the heating and cooling equipment.

Further, as both the heating and cooling treatment is performed with the preform building elements respectively the hot preform being arranged in the mould, the mould is occupied. As the heating and the cooling process takes a remarkable time, the whole mould is blocked during these long-lasting procedures, the productivity is extremely low. This is even enhanced, as the mould cannot be preheated. The temperature treatment thus needs to start from room temperature, as all building elements need to be separately arranged in the mould before their vacuum consolidation, whereafter the heating may start. Further, it is necessary to cool down the hot preform to room temperature in order to secure its stability for handling it with the lifting equipment. Further, the time during which the respective mould is occupied may even be extended, as sometimes a preform is not removed immediately after cooling it, but instead remains for a certain time in the mould if no storing capacity is given.

Finally, after lifting the preform out of the mould, it is necessary to thoroughly clean the mould surface for the next manufacturing process, which cleaning step also takes its time. Still the mould cannot be used, until this cleaning step is finished.

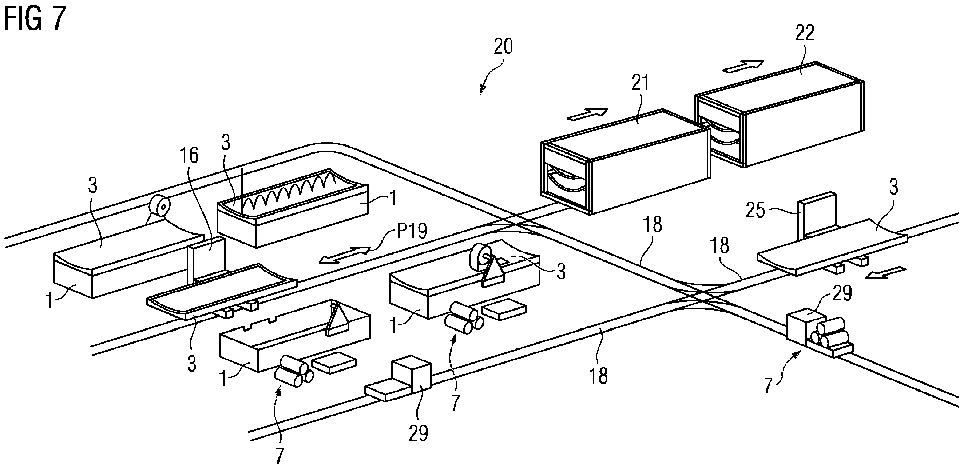

The document WO 2019/115337 discloses a system and a method for manufacturing preforms for a wind turbine rotor blade. According to the teaching of said document, the manufacturing system of this invention comprises a stack of four preform moulds 70a-d, all preform moulds70a-d having such substantially identical width W, substantially identical height H and substantially identical length L, so that they can be stacked (see fig. 7a and page 19, lines 15 ff.). On each of these separate moulds 70, the preform building material 70 is arranged, whereafter the moulds 70a-d are stacked again in a heating oven92, as shown in fig. b, c.

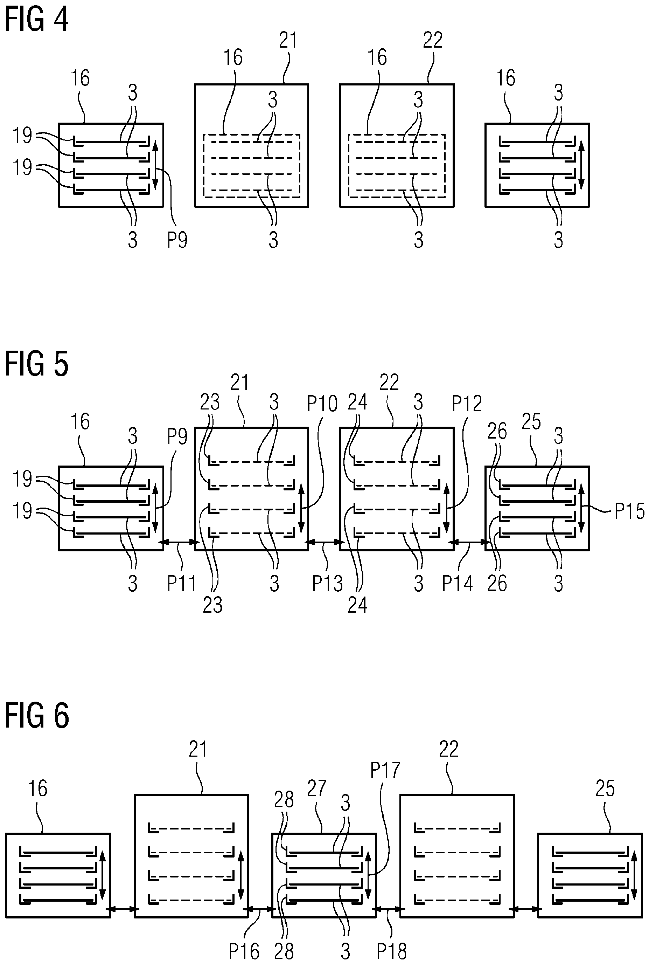

The document WO 2019/115522 discloses a method and a mould system for manufacturing at least two preforms for moulding a wind turbine blade. The system of said document discloses and solely focusses on a mould having a mould surface of variable shape such that the shape of the moulding surface can be varied at least between a first and a second configuration by means of actuators, onto which the element providing the moulding surface is arranged. This system is shown in figs. 5-8 and disclosed in detail in the respective description. By means of the actuators,which are cylinders 74 with a movable rod 76, to which rod the carrier plate building the mould structure 68 is arranged, the shape can be changed. Further, the figs. 9-11 disclose a moulding system 100 for manufacturing a preform for a wind turbine, which comprises a mould structure 102 having the form of a frame or cassette, and which comprises an at least partially perforated sheet 104 comprising a moulding surface 106. This moulding structure 102 is arranged on a table 110. This table 110 is equipped with an airflow generating means 108, which provides hot air from underneath the sheet 104, which hot air passes through the perforated sheet 104 towards the moulding surface 106. The detailed description regarding figs. 9-11 is found on page 19,lines 33 ff. The mould structure 102 is obviously removable and changeable to another mould structure 102 having a different moulding surface, which is perforated to another extent. While in fig. 9 the mould surface is perforated only in the center section, in fig. 10 the mould surface 106 is perforated over its whole surface. This respective perforation allows the hot air blown form underneath to pass to the upper side of the moulding surface 106 and therefore to the building material arranged on the moulding surface 106.

It is therefore an object of the invention to provide an improved method for producing a preform for a wind turbine blade.

To address the object, the invention proposes a method for manufacturing a preform of a wind turbine blade, with the steps:
- Providing a mould and arranging a preform building material in a transferable mould element removably arranged on a mould carrier,
- Fixating the preform building material on the mould element,
- Removing the mould element with the fixated preform building material from the mould carrier and transferring it into a heating means,
- Heating the preform building material for producing the preform,
- Removing the mould element with the preform from the heating means and cooling the preform.

According to the invention, a specific new mould type is used for manufacturing preforms. This mould type comprises a mould carrier, to which a mould element, which provides a mould surface corresponding to the geometry of the preform to be built, is removably fixed. The mould element is therefore transferable and can be removed from the carrier. The mould itself respectively the mould element is only used for arranging and fixating the building material on it. Right after placing and fixating the building material, the transferable mould element is removed from the mould carrier and is transferred to a heating means, for example a heating oven, in which the building material is heated respectively the binding agent is molten and/or activated for fixing or adhering respectively gluing the fiber material like fiber mats and/or the core elements etc. in the binder matrix. After this heat treatment the preform is cooled for example to room temperature by a cooling treatment, whereafter the final preform can be lifted from the transferable mould element with a respective lifting equipment.

During the whole manufacturing process the building material respectively the preform is arranged on the movable mould element and is therefore moved with the mould element between the respective manufacturing stations. As this mould element is plate-like with a tray-like element surface, the whole construction set-up of this mould element and the building elements respectively the preform itself is quite thin and therefore very easy to handle. Following the placement and fixation of the building material, for example by vacuum fixation, the plate- or tray-like mould element can be removed from the mould carrier and transferred to the heating means for further processing.

This inventive method shows a bundle of advantages. As the mould itself is solely used for arranging the building material on the mould element and for fixing it to the mould element, no heating or cooling treatment is performed in the mould. Therefore, the mould design is very simple, as no heating or cooling equipment needs to be provided at the mould. Further, as the mould carrier, which may be a frame-like carrier or the like, is not exposed to any heating or cooling, it will be dimensionally stable and last longer, as it is solely carrying the mould element and the building material.

As only the packing is done in the mould and right after finishing this packing the mould element is removed, immediately afterwards a new mould element may be arranged on the mould carrier. This allows to immediately start with the arrangement of new building material on the mould element of the same mould, which was occupied short time before. This allows to remarkably increase the throughput and the capacity. As usually a certain number of separate moulds are provided, an ongoing production may be realised, as it is only necessary to provide a respective number of separate mould elements, which can be interchanged with the respective mould carriers.

As only the mould element with the fixated building material needs to be removed from the mould carrier for the further processing, no specific lifting means directly at the mould is necessary, as the plate- or tray-like mould element may simply be removed from the mould carrier for example by a linear pushing or pulling action.

As the heating is performed in a heating means separate from the mould, which heating means is solely used for heating the building material, this heating means respectively the oven can be pre-heated, so that it is constantly held on the respective process temperature. It is preferred that the heating means has a respective capacity, so that several plate- or tray-like mould elements with building material may be simultaneously arranged in the heating means respectively the oven, which further contributes to raising the capacity and the throughput of the manufacturing arrangement. The building material is heated e.g. to a temperature of 80°-100°.

Further, as the building material respectively the preform is arranged on the movable mould element throughout the whole manufacturing process, the handling is improved, as it is not necessary to get in contact with the preform element at any time until it is finally produced. Further, as the mould element together with the vacuum cover, e.g. a foil, provides a perfect protection of the preform, it is possible to store the mould element with the preform in stock after the cooling process. Thus, contamination of the preform with e.g. dust particles, moisture penetration and/or material degradation can be avoided.

When the preform is removed from the mould element, the mould surface of the mould element may receive immediately a surface treatment before it is again placed on the mould carrier. As the system comprises several mould elements, there is always a clean mould element at hand right after a mould element with the fixated building material is removed from a mould carrier, so that the new mould element can be placed on the mould carrier and a new cycle may start.

The inventive method allows for a remarkably higher throughput in the production of preform elements, as the steps of arranging and fixating the building material are the only steps performed directly at the mould, while the heating and cooling steps are separated and are solely performed using the removed mould element with the fixated building material.

As mentioned, the mould element is a multi-functional element. It is used as the receiving element, which receives the building material and which defines the shape and/or form, in which the building material is arranged. It is further a fixation element, as together with the vacuum foil it is used for fixating the building material. Further, it is used as a transport element, as it is removed and transported from the mould carrier through the following manufacturing stations, always securing that the fixated building material or the preform remains in shape. To accomplish these multi-functional characteristics, a mould is used comprising a mould carrier with a removable stiff tray-like mould element providing a mould surface on which the building material is arranged. According to this embodiment, the mould element itself is stiff and completely stable in its form. It is preferably made of a plate which is formed or machined to provide the respective mould surface on which the building material is arranged. The mould element respectively the plate it may be made of has a thickness of for example 2 -5 cm. As the mould element itself is stiff, form stable and heat resistant even at elevated temperatures i.e. well above the temperature applied in the heating means, the stability of the vacuum-fixed building material is ascertained, as the mould element itself provides this stability, although the building material is securely fixed by the vacuum.

As mentioned, the building element may comprise at least a fiber material, preferably in the form of fiber mats, be it glass fiber or carbon fiber mats, while also both types of mats may be used in building a preform. Further, the building material comprises a binding agent, usually in the form of a binding powder, granulate or the like but may also be a liquid or hot melt based binding agent, which binding agent is usually locally applied below, between or above the respective fiber material or fiber mats. Further, one or several core elements may optionally be arranged, for example core elements made of wood such as balsawood or a foam, e.g. a synthetic foam, or the like. The stack is locally fixed by the molten binding agent in order to maintain it open for a resin infiltration during the manufacturing process of the turbine blade or blade part.

As also mentioned, the preform building material is fixated on the mould element by at least one vacuum cover covering the preform building material and an applied vacuum. This vacuum cover is preferably a vacuum foil, which is thoroughly placed over the building material and which overlaps with the mould element, whatever kind this mould element is. By applying a vacuum between the mould element and the vacuum cover, the space in between, in which the building material is arranged, is evacuated and the vacuum cover is sucked towards the mould element, thereby fixating the stacked building material.

Preferably the vacuum established is maintained during any subsequent process steps, and in particular only released at the earliest after the heating process but may also be maintained throughout the cooling process as well and even more only released prior to the preform element is to be released from the mould element and even so only just prior to the preform element is to be used and placed in a blade mould. The vacuum is preferably established by using appropriate vacuum means such as a pump connected with hoses and valves attached to the vacuum cover allowing to couple and decouple such vacuum means. Thus, the vacuum established may during or prior to any subsequent process steps be checked, e.g. using an appropriate pressure measuring device such as a manometer. If the pressure is above a certain threshold the vacuum can again be brought back to the desired level using vacuum means. The use of e.g. hoses and valves also provides the option to blow e.g. air into the vacuum cover as to ease the release of the cover from the mould element and/or preform building material or the preform element after the heating or cooling process step.

As mentioned, after the building material is arranged and fixated on the mould element, the mould element itself is removed from the mould carrier in order to transfer it to the heating treatment. For transferring the mould element to the heating means, the mould element with the fixated preform building material is transferred from the mould carrier to a mould transport means and either stored in the transport means until it is transported with the transport means to the heating means or directly transported with the transport means to the heating means. According to this embodiment, a mould transport means is provided, which is adapted to receive at least one mould element with the respective fixated building material. This transport means now may either serve as a kind of buffer, which allows to store the at least one or, if it is adapted to store more than one mould elements, the several mould elements until the time they will be further processed in the heating means. In an alternative the transport means may directly transport the one or the several mould elements to the heating means.

Preferably, more than one mould elements are transferable to a common, preferably rack-like transport means. The transport means thus is adapted to receive a certain number of mould elements with preform building material, for example five to ten. The transport means respectively the rack has respective compartments, for example arranged vertically stacked, with each compartment receiving one mould element. This allows to either store a higher number of mould elements in the rack-like transport means for buffering them, or for moving the higher number simultaneously directly to the heating means.

For collecting the several mould elements in the tray-like transport means, the transport means moves from a first mould carrier for receiving a first mould element to one or more further mould elements. For this purpose, the transport means may move or be moved on respective rails or guides arranged in or on the floor, e.g. along a row of separate moulds or mould carriers for collecting the respective mould elements for further processing.

After the transport means has received the one or the several mould elements, they are transferred to the heating means, either directly or after a certain delay. For moving the mould elements into the heating means like the oven, several alternatives are feasible. According to a first alternative the transport means with one or more mould elements moves into the heating means. Here the transport means itself with the mould elements moves into the oven and remains with them in the oven during the entire heat treatment. In an alternative embodiment, one or more mould elements are moved from the transport means into the heating means. Here the transport means moves in a transfer position, in which the or each mould element is transferred from the transport means into the oven for the heat treatment. The transport means in this embodiment can immediately return and start again collecting mould elements. In this embodiment, the heating means respectively the oven has separate compartments each receiving a mould element, as preferably the oven has a dimension which allows to process an enlarged number of mould elements simultaneously. So, it is either dimensioned and comprises a certain number of compartments to receive a respective number of mould elements, or it is dimensioned to receive the whole transport means with the mould elements. In any case the oven may be designed to house several mould elements or mould element transport means placed parallel or in extension of one another.After the heat treatment, the mould elements respectively the now generated preform needs to be cooled. While the first step regarding the arrangement of the building material and the fixation of the same is the only step performed on the mould, the following processes are separate from the mould, also the cooling process is separated from the heating process respectively the oven. This means that the hot preforms and mould elements will not stay in the oven during the cooling process, which allows to immediately use the heating means again right after the mould elements are removed from the oven.

The cooling process may also be performed in various ways. It is possible that after the heating the one or more mould elements are removed from the heating means and are cooled in ambient air. According to this embodiment the mould elements with the hot preforms are simply moved out of the oven and left to cool down in a cooling area or the like and thus in the ambient air. To avoid that the temperature within the manufacturing facility gets too high due to this cooling, the ambient air cooling should take place in an area outside of the manufacturing building. In an alternative to the ambient air cooling, the mould elements may be moved into a cooling means. Here a specific cooling means, where an active cooling is performed, is provided. Like the heating means, which may be an oven with a respective heating source, the cooling means may also be a housing with a respective cooler like a cooling fan or the like. If the heating means and the cooling means are for example placed close to each other, it is possible to establish a kind of energy recycling, as the heat dissipating from the cooling preforms may be transferred to the heating means.

As already mentioned, it is possible to either move the transport means, i.e. the rack, with the preferably several mould elements into the heating means, or to move only the separate mould elements into the heating means. If the whole rack is in the oven, preferably only the whole rack with all mould elements is removed from the oven, yet individual elements can also be removed from the rack. If the separate mould elements are individually placed in the oven, they may likewise be removed separately from the oven. By removing individual mould elements from the oven, this allows to differently heat respective mould elements and their preform building material, as depending on their respective set-up, e.g. one preform may need a longer heat treatment, while another preform needs a shorter heat treatment. So the introduction of the separate mould elements into, and eventually out again, the oven brings more flexibility regarding the heating process.

Resulting from these various ways of arranging the mould elements in the heating means, also various embodiments regarding the transfer for the next cooling step are feasible. According to a first alternative the transport means comprising the one or the more mould elements is transferred into the cooling means. Here, as the occupied transport means respectively rack is in the oven, the whole transport means with the hot mould elements and preforms is moved from the oven into the cooling means like the cooling chamber or the like. Preferably, respective rails or other kind of guides are provided allowing a simple transfer of the rack from the oven to the cooler.

In an alternative embodiment the one or more mould elements itself are transferred from the heating means onto a transport means or a further transport means, wherein either the transport means remains or moves into ambient air for cooling, or wherein the transport means moves to the cooling means, with either the one or the more mould elements are transferred into the cooling means or the transport means moves into the cooling means. In this alternative, the separate mould elements arranged in the oven are transferred to and collected on a separate transport means arranged at the exit of the heating means. This transport means, just like the transport means arranged between the moulds and the heating means, is adapted to receive a respective number of mould elements with their preforms. Depending on the cooling process two variations are feasible. First, the transport means remains or moves into ambient air for cooling. Here the rack with the preforms either remains close to the heating means or moves to a specific cooling area, where an ambient air cooling is performed. In an alternative, the transport means moves to the cooling means, i.e. the specific ventilation cooler or the like, where either the separate mould elements are removed from the transport means and transferred into the cooling means, where respective separate compartments are arranged for receiving them. In an alternative, the whole transport means may move into the cooling means. In any case the cooling means may be designed to house several mould elements or mould element transport means placed parallel or in extension of one another.

Finally, it is also possible that the mould elements itself are directly transferred from the heating means into the cooling means. Here, the heating and the cooling means are directly arranged in line and are provided with respective transport devices, so that the mould elements with the preforms may directly be shifted from the heating to the cooling unit. These transport devices may again be rails or roller guides or the like.

As is obvious, several possibilities for bringing the respective hot mould elements with the hot preforms to the cooling means or area(s) are feasible.

After the cooling, the respective fabricated preforms are removed from the mould element. This is preferably done by a lifting equipment, preferably a vacuum lifting means. With this equipment the respective preforms are either moved to a storage side or directly to the further processing, where the preforms are arranged in a large blade mould for finally producing the blade. If the mould elements with the preforms are arranged on a transport means, they need to be removed from the transport means, for which purpose they may for example be transferred to a kind of conveyor or the like, by which they are transported to the lifting equipment. This may necessitate to certainly move the occupied rack out of the cooling unit respectively to move the separate mould elements with the preforms out of the cooling unit in case no ambient air cooling is performed.

The vacuum cover or the like and/or the release film if so used, is eventually removed from the preform element after cooling of the preform e.g. prior to placing the preform into the blade mould.

The invention further refers to a manufacturing arrangement for manufacturing preforms for a wind turbine blade, comprising
- One or more moulds each comprising a mould carrier and one or more assigned mould elements each adapted to fixedly receive preform building material and removably arrangeable on the mould carrier,
- A heating means adapted to receive at least one of the mould elements, with the preform building material, removed from the mould carrier.

Preferably, there is a larger number of moulds, for example 5, 10 or 20 moulds. Preferably, the number of mould elements is greater than the number of carriers, so that the moulds may permanently be used, as immediately after removing a mould element with the fixed preform building material a new, cleaned if necessary, mould element may be arranged on the mould carrier and new building material may be arranged on the surface of the mould element. So, for this ongoing cycle process a certain number of separate, interchangeable mould elements are necessary. The mould elements, which are assigned to a common mould carrier, may all be the same, so that this respective mould always produces the same type of preform element. But certainly, in an alternative, the mould elements may also be completely switched between the respective mould carriers.

Each mould element may be a stiff tray-like mould element providing a mould surface adapted to receive the preform building material with the mould carrier comprising mould element receiving means. In this embodiment, the mould element itself is form stable and for example made from a stiff and rigid plate, which is respectively machined in order to provide the respective formed mould surface, onto which the preform building material is arranged. The mould element may e.g. be 3-D printed i.e. an additive preparation process, casted or form pressed. This stiff mould element is removably placed onto the mould carrier, which may be a simple frame-like carrier arrangement, and which is provided with the respective receiving means. These receiving means may for example be longitudinal rails or bars or the like, on which the stiff mould element is arranged with its longitudinal edges.

The stiff mould element may for example be made of metal like aluminium or made of a sufficiently heat-resistive polymer or wood and may preferably comprise a surface which is not adhesive to the binding agent. If the surface is adhesive to the binding agent, a release film or similar release agent may be placed on the mould element surface prior to placing the preform building material. This stiff element may have a thickness of for example 1 - 5 cm, depending on the material it is made of. The cleaning may be performed with respective automatic cleaning means, to which the respective mould element is preferably automatically transferred after the preform is removed, and from which the cleaned mould element is recirculated back to the area with the mould carriers. So it is a circular process starting with the mould section, where the mould elements are placed on the carriers, followed by arranging of the building material, followed for example by the transfer to the transport means, followed by the transfer of the mould elements into the heating means in the above mentioned different ways, followed by the heating step, which is followed by the cooling step, which may also be performed in various ways, whereafter the preforms are removed and further processed, while the emptied mould elements are automatically cleaned and recirculated back to the beginning of the process cycle.

The manufacturing arrangement further comprises at least one mould element transport means adapted to receive one or more mould elements with the fixated preform building elements for transferring the one or more mould elements to the heating means. This transport means, which preferably is adapted to receive several mould elements, is used to transport the one or the more mould elements from the respective mould carriers to the heating oven. It comprises respective receiving or fixation means for the respective mould elements like respective rails or bars or the like, on which the edges of the mould elements rest. The transport means may either transport the mould elements directly to the heating means or first to a storing location and afterwards to the heating means.

Furthermore, the mould element transport means is adapted to receive the rectangular mould elements by receiving it from the longitudinal element side or from the shorter element side. The mould element may therefore either be inserted from the side vertical to the longitudinal axis or from the front along the longitudinal axis.

The mould element transport means, which is adapted to receive several mould elements, preferably comprises vertical movable mould element receiving means for vertically stacking the several mould elements. Here, the transport means respectively the rack is provided with a kind of paternoster lift or the like, thus any kind of elevating means, which allows for example to take the first mould element in the lowest position, whereafter this first mould element is lifted, until a second mould element may be introduced, both of which elements are then lifted etc. This lifting means may for example be circulating chains, belts or the like, to which the respective receiving elements are arranged. Such arrangement allows the mould elements to easily slide (pushed or pulled) into the receiving means of the mould element transport means with little or no lifting efforts. Accordingly, only a horizontal movement of the mould elements needs carried out which limited the need for lifting of the mould elements by machine or persons.

The heating means itself may be adapted to receive one, preferably more mould elements itself. Here, the mould elements with a building material are directly introduced into the oven. In an alternative, the heating means may also be adapted to receive the transport means comprising the one or more mould elements. In this embodiment the complete rack with the transport elements is moved into the heating means.

If the heating means is adapted to receive the mould elements itself, it may comprise vertically moveable mould element receiving means for vertically stacking the several mould elements. Again, the mould element receiving means may be an elevator means like a paternoster lift or the like, which allows to vertically move the mould elements for vertically stacking them. Again, the first mould element is for example received in the lowest position, whereafter it is vertically moved for a first distance, whereafter the second mould element is introduced, both of which mould elements are then again moved vertically, etc. Again, such arrangement provides a horizontal movement only of the mould elements which limited the need for lifting of the mould elements by machine or persons.

Further, the arrangement may comprise a cooling means adapted to receive the one or more mould elements with the heated preforms for cooling them. This cooling means allows for an active cooling operation for example by using a cooling fan for removing the heat, wherein the cooling means may be coupled with the heating means in order to establish an energy recycling. The cooling means, which may be a kind of cooling chamber or cooling box, is adapted to receive one, preferably more mould elements itself, while also the whole transport means comprising the one or more mould elements may be received by the cooling means. Again, just like at the heating means, also here only the mould elements with the heated preforms may be separately received in the cooling means, or the occupied transport means respectively the rack.

In this circumstance, the transport means received by the cooling means may be the transport means which was previously positioned in the heating means. According to this embodiment, the transport means respectively the rack is directly transferred from the oven to the cooler, for example automatically and rail guided. In an alternative, if the oven has received the separate mould elements, the transport means is adapted to receive the one or more mould elements from the heating means.

If the cooling means is adapted to receive the mould elements itself, it may preferably comprise vertically movable mould element receiving means for vertically stacking the several mould elements. Also, the cooling means may be provided with a lifting means like a paternoster lift or any other kind of elevating means, which is adapted to take the separate mould elements. Again, they may be received from the transport means at a lower position, whereafter the first mould element is lifted to a second position, where another mould element is received, etc. Again, such arrangement provides a horizontal movement only of the mould elements which limited the need for lifting of the mould elements by machine or persons.

As mentioned above, it is possible that certain transfers of a mould element from one position to another position or from one item to another item may be performed. To conveniently accomplish these transfers, transfer means for transferring a mould element from the mould carrier to the transport means and/or from the transport means to the heating means and/or from the heating means to the further transport means or the cooling means or from the further transport means to the cooling means are provided. No matter how the set-up is, the transfer means are provided to ease the transfer from one device to a following device of the arrangement. Preferably, these transfer means work automatically, but may also involve partial manual operation like pushing or pulling operation. So, these transfers may be accomplished preferably automatically by means of respective drive motors or the like, whereas in some cases also some manual handling is possible.

The transfer means itself may comprise pushing means arranged at the mould and/or at the transport means, and/or pulling means arranged at the transport means and/or at the heating means, and/or rolling elements arranged at the mould and/or at the transport means bearing the mould elements. These pushing or pulling means may comprise certain pushing or pulling rods or the like, which may automatically couple the mould element to be pushed or pulled e.g. by a motor drive. Also, roller elements may be arranged on respective guide rails or the like, allowing for a simple movement of the heavier mould element with the building material or the preform, which movement may also at least be initiated by manual pushing or pulling, as the roller elements allow for a very smooth and soft movement. It is to be noted that a mould element, no matter if any kind of transfer means is provided or what kind of transfer means is provided, is preferably locked to the respective device by locking elements. So, the mould element is for example releasably locked to the mould carrier or to the transport means or to the respective mould element receiving means in the heating oven or the cooling unit etc. These locking means may engage automatically, when the mould element is in place, and may also disengage automatically, when it shall be removed.

As mentioned, the or each transport means is preferably used for collecting several mould elements from the respective mould carriers or for moving them to the heating means or from the heating to the cooling means etc. Preferably, each transport means is, preferably automatically, movable along respective guiding rails. These preferably floor-based rails ascertain a defined and secure pathway.

Finally, the invention refers to a mould for a manufacturing arrangement as previously described. This mould is characterised by a mould carrier and at least one interchangeable mould element, which mould element is a stiff tray-like mould element providing a mould surface adapted to receive the preform building material, wherein the mould carrier comprises mould element receiving means.

As the building material is vacuum-fixated on the mould element, the mould carrier also comprises a respective vacuum fixation means for fixing the building material to the mould element using a vacuum cover, e.g. a foil, a vacuum mat or the like, preferably a foil since it is lightweight and easy to handle.

Finally, the mould comprises a transfer means for moving the mould element from the mould carrier, which transfer means preferably comprises a, preferably automatic, pushing means and/or rolling elements arranged at the mould carrier.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: is a principle illustration of an inventive mould of a first embodiment,
- Fig. 2: is a principle illustration of an inventive mould with a transport means for receiving mould elements,
- Fig. 3: is a principle illustration of a manufacturing arrangement,
- Fig. 4: is a principle illustration of a second alternative for transferring the mould elements into the heating means and into the cooling means,
- Fig. 5: is a principle illustration of a third alternative for transferring the mould elements into the heating means and into the cooling means,
- Fig. 6: is a principle illustration of a fourth alternative for transferring the mould elements into the heating means and into the cooling means, and
- Fig. 7: is a principle illustration of a manufacturing arrangement of a second embodiment.

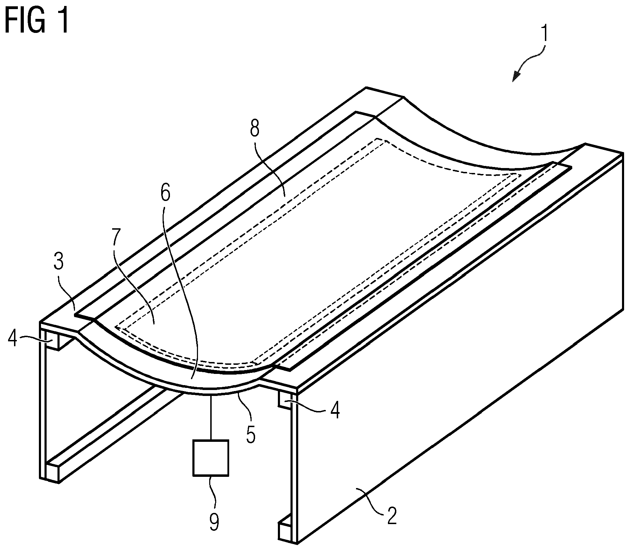

Fig. 1 shows a principle illustration of a mould 1 for manufacturing a preform for a wind turbine blade. The mould 1 comprises a mould carrier 2, to which a removable or interchangeable mould element 3 is attached. The mould carrier 2 comprises respective receiving elements 4, for example longitudinal rails or beams or the like, on which the mould element 3 rests. It may be fixed thereto by respective locking elements, which are released when the mould element 3 shall be removed.

The mould element 3 comprises a tray-like recess 5 with a mould surface 6, on which building material 7 for building the preform is arranged. The building material 7 comprises fiber material like fiber mats made of glass or carbon fibers, and a binding agent usually in powder or granular form. A liquid or hot melt binder may however also be used. The building material 7 is arranged in the respective order respectively the needed amounts, wherein the building material 7 obviously follows the tray-like form of the mould surface 6.

After arranging all the building material on the surface 6, a vacuum cover 8 is arranged which overlays the building material 7 and extends also onto the surface 6 of the mould element 3, as fig. 1 shows. The mould carrier is equipped with a vacuum fixation means 9 comprising a vacuum pump and respective hoses or the like with valves allowing to couple and decouple the means 9 to the mould element 3, allowing to generate a vacuum between the mould element 3 and the vacuum cover 8 in order to evacuate the space between them, where the building material 7 is arranged. This evacuation or vacuum fixation fixes the building material 7 very tightly to the mould element 3.

The mould element 3 itself is a rigid plate-like element, which is made from a respective stiff plate for example made of a metal such as steel, aluminium or the like or a plastics that is heat resistant and form stable during the heating process that will follow. This e.g. steel or aluminium plate is shaped accordingly in order to prepare the tray-like or convex mould surface 6.

As mentioned, the mould element 3 is removable from the mould carrier 2. After vacuum fixation of the building material 7, it is possible to remove the mould element 3 with the fixed building material 7 and the vacuum cover 8 after decoupling it from the vacuum fixation means 9, while the vacuum is maintained between the mould element 3 and the vacuum cover 8, so that also the fixation of the building material is maintained. The mould element 3 can now be moved to a heating means for further processing. Solely, the mould carrier 3 remains in place and may be equipped with another new and clean mould element 3, on which immediately after removal of the previous mould element 3 a new building material 7 may be arranged etc.

The first embodiment according to fig. 1, as mentioned, comprises a stiff and form stable, plate-like mould element 3, which is removably arranged on top of the mould carrier 2, e.g. simply by lowering it on the carrier 2 with a lifting means or by pushing it on the mould carrier 2 with a transport means or by hand. As the mould element 3 itself is stiff, the handling is easy, no form or shape change occurs during the handling and further processing.

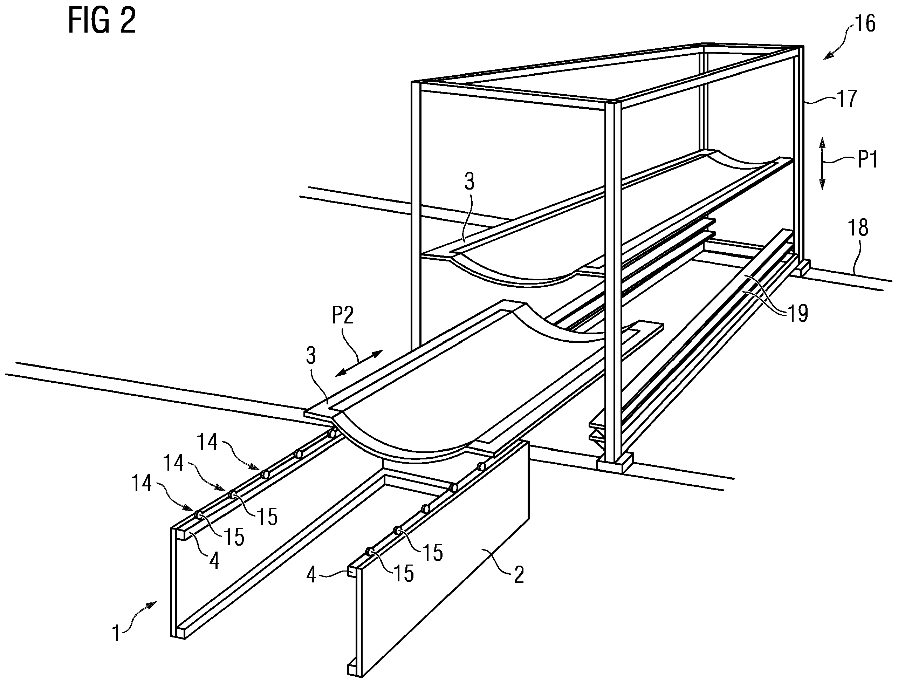

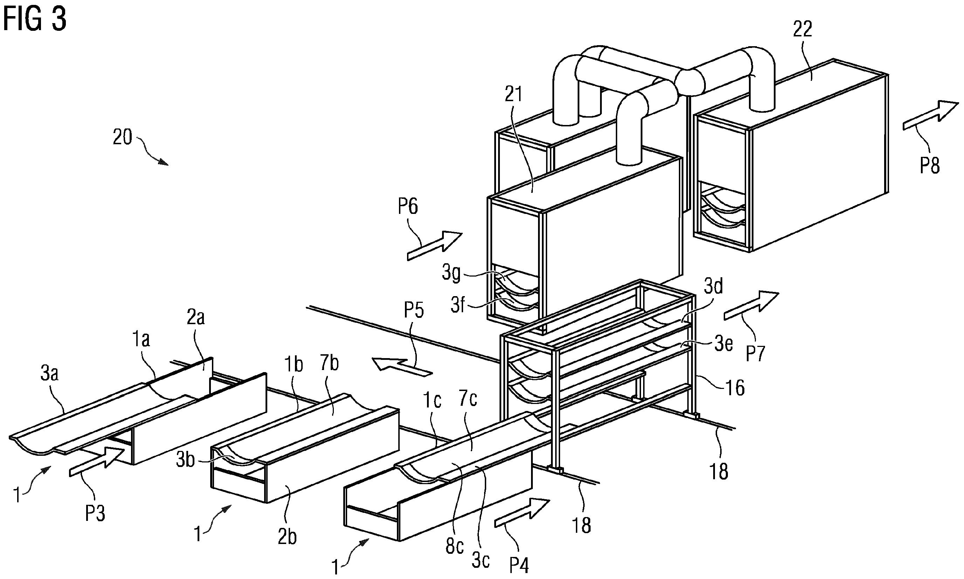

Fig. 2 shows the inventive mould 1 according to fig. 1. The mould element 3 with the vacuum-fixed building material is already partially moved from the mould carrier 2. The receiving means 4 are equipped with respective transfer means 14 here in form of the respective roller elements 15, on which the mould element 3 rolls and can easily be pushed or pulled in order to transfer it to a transport means 16, here in form of a rack 17. This transport means 16 is movable and guided on respective rails 18, so that it can e.g. automatically move along several moulds 1, which are arranged side by side, one of which is only shown in fig. 3. The transport means 16 is adapted to receive several of the mould elements 3 with the vacuum-fixed building material 7. As fig. 3 shows, already one mould carrier 2 from a not-shown mould 1 is already received in the rack 17. The rack 17 comprises respective receiving means 19, here in form of longitudinal bars or carriers, which are e.g. provided with rollers or the like in order to easily move the mould element on them. The receiving means 19 are, as shown by the arrow P1, vertically movable, so that respective receiving means may be moved in place to receive a new mould element 3, whereafter the receiving means 19 with the mould element 3 is vertically moved and another receiving means 19 is moved in place in order to receive another mould element 3. The mould elements 3 are, as shown by the arrow P2, simply pushed into the rack 17 by respective pushing means, which may be arranged at the carrier 2, while these pushing action may also be performed manually, as the mould element 3 rolls on the roller elements 15. It may also be pulled into the rack 17 by using respective pulling means arranged at the rack 17. These pushing or pulling means may for example be pushing or pulling rods or the like.

The vertical movement of the receiving means 19 may be performed by respective electric motors or for example driving circulating chains or belts, to which the receiving means 19 are coupled, or respective spindle drives or the like. Also, the respective pushing or pulling means may be motor driven.

Fig. 3 shows a first embodiment of an inventive manufacturing arrangement 20 for producing preforms for turbine blades. It shows in this example three moulds 1, which are arranged side by side. The mould 1a is equipped with a new mould element 3a, which is, see the arrow P3, pushed or anyhow else placed on the mould carrier 2a. The second mould 1b is equipped with the mould element 3b arranged on the mould carrier 2b. The building material 7b is already arranged on the mould element 3b, but for example not yet vacuum-fixed.

Finally, the mould element 3c of the third mould 1c is ready for the further processing and is therefore, as shown by the arrow P4, moved into the transport means 16 respectively the rack 17. The mould element 3c comprises the building material 7 covered by the vacuum cover 8c, it is therefore vacuum-fixed. As shown, it is already partially moved into the rack 17, in which already two other mould elements 3d, 3e are arranged.

The rack 17 moves on the respective rails 18 in the direction of the arrow P5 and therefore along the respective moulds 1. At each mould 1 the respective mould element 3 comprising the fixed building material is received on respective receiving means 19 of the rack 17, until the rack 17 is fully loaded.

The rack 17 then moves to a heating means 21, i.e. a heating oven, which can be pre-heated respectively remains always at a certain temperature level necessary for melting the usually only locally applied binding agent in order to embed all the fiber material and core material etc. in a respective fluid binding matrix. Several mould elements are moved into the heating means 21, as shown by the arrow P6. In this illustration already several mould elements 3f, 3g are already in this heating means 21, which is shown partially opened just for illustration purpose. They are heated for a certain time necessary to build the preform. Regarding the way the mould elements are inserted in the heating means several possibilities are feasible, which are explained later.

Further shown is a cooling means 22, like a housing or unit comprising a cooling fan or the like, which is adapted to actively cool the heated preforms, which are, as shown by the arrow P7, transferred from the heating means 21 to the cooling means 22. This transfer will also be described later. The mould element capacity of the cooling means 22 preferably corresponds to the mould element capacity of the heating means 21, so that all heated mould elements 3 can be transferred to the cooling means 22 and be cooled simultaneously.

In this cooling means 22 the hot preforms are cooled down to an ambient temperature, whereafter they are removed from the cooling means 22, as shown by the arrow P8 to be further processed.

As this principle layout clearly shows, the moulds 1 are only used for preparing the building material 7 and for shaping the form of the building material 7 according to the requested preform shape and for fixing the building material 7 to the respective mould element 3. Right after the respective mould element 3 is removed from the mould carrier, a new mould element 3 may be put in place on the mould carrier, which new mould element 3 is completely surface cleaned to ensure that the building material 7 may be properly arranged.

The heating process is completely separated from the mould area. As only the heating is performed in the heating means, this heating means can be held on a constant temperature, which allows a very short heating operation.

The same holds for the cooling means 22, which allows for a separated cooling step, and which cooling means 22 can also be maintained on a certain cooling temperature or allows to actively run a certain cooling ramp in order to enhance the cooling.

Thus, an almost constant manufacturing may be realised, as it is constantly possible to provide respective loaded mould elements 3 ready for the heating and cooling processing. The time, for which a mould 1 is occupied, is very short and corresponds almost only to the time needed for arranging a new mould element 3 in place, loading the building material 7 and fixing it, and for removing the loaded mould element 3. As both the heating means 21 and the cooling means 22 are adapted to receive several mould elements, also the heating and cooling process is significantly faster, as a certain number of mould elements may simultaneously be processed.

Fig. 4 shows a first alternative regarding the transfer of the mould elements 3 into the heating means 21 and the cooling means 22. In this embodiment the mould elements 3 are arranged in the transport means 16, i.e. the rack 17, and are received on respective receiving means 19, which are, as shown by the double arrow P9, vertically movable, as previously mentioned.

In this embodiment, the complete transport means 16 with all the mould elements 3 moves into the heating means 21 and stays there during the heating process. When the heating process is finished, the transport means 16 moves out of the heating means 21 and directly into the cooling means 22 to be finally cooled. After the cooling step is finished, the whole transport means 16 with the cool mould elements 3 comprising the cooled preforms is moved out of the cooling means 22, whereafter the mould elements 3 may be removed from the transport means 16 and the finished preforms may be removed from the mould elements 3 for further processing. In an alternative the transport means 16 may be moved to a storage area for storing the finished preforms.

The mould elements 3 will be, after the preforms are removed, automatically surface cleaned and will be automatically recirculated again for being arranged on an unloaded mould carrier 2 again.

In the embodiment of fig. 5, again a transport means 16 respectively a rack 17 is shown, which comprises several mould elements 3 arranged on a respective vertically movable receiving means 19, as shown again by the arrow P9.

The heating means 21 is equipped with separate receiving means 23 which are vertically movable, as shown by the double arrow P10. The separate mould elements 3 of the transport means 16 are, as shown by the arrow P11, horizontally moved from the transport means 16 to the heating means 21 respectively from a receiving means 19 to a receiving means 23. For example, only the lowest mould element 3 is moved to the lowest position in the heating means 21. In the next step, the next mould element 3 of the transport means 16 is lowered, while the previous mould element received in the heating means 21 is raised, so that a new transfer may start until all mould elements are unloaded. As soon as the transport means 16 is unloaded, it returns to again receive new mould elements 3.

After the heating process is finished, the separate mould elements 3 are transferred to the cooling means 22. The set-up of the cooling means 22 is comparable to the set-up of the heating means 21. Also, the cooling means 22 comprises receiving means 24, which are, see the double arrow P12, vertically movable. Again, by using respective transfer means, as shown by the arrow P13, separate and single mould elements 3 are moved from the heating means 11 respectively a receiving means 23 to the cooling means 22 respectively a receiving means 24. Also, here the respective vertical movement is performed.

After the cooling is finished, the mould elements 3 with the cooled preforms are transferred to another transport means 25, again a rack, with a respective receiving means 26 for receiving the respective mould elements 3, as shown by the arrow P14. The receiving means 26 are, as shown by the arrow P15, also vertically movable. With this transport means 25 the mould elements 3 with the finished preforms may be transported to a storage area or to a further processing device etc.

It is to be noted that the transport means 25 is only optional. It is certainly possible to transfer the separate cooled mould elements 3 for example to a respective conveyor belt or the like and to transport them into a storage area or to a lifting device for vacuum-lifting the finished preforms from the mould element for further processing the preforms. The emptied mould element 3 will then be surface cleaned if so needed and recirculated.

Fig. 6 shows an embodiment with a first transport means 16, which set-up is identically to the transport means 16 of fig. 5. Also, the heating means 21 and the cooling means 22 correspond in their set-up and function to the heating and cooling means 21, 22 of fig. 6. In this embodiment, the heating means 21 and the cooling means 22 are distanced, thus a direct transfer of the mould elements is not possible. For the transfer a further transport means 27 is provided, comprising respective receiving means 28, e.g. beams or rails, on which the separate mould elements 3 are received from the heating unit 21, as shown by the arrow P16. Again, the receiving means 28 can be vertically moved, as shown by the arrow P17.

After the transport means 27, again a rack, is completely loaded, it moves to the cooling means 22, where the separate mould elements 3 are unloaded as shown by the double arrow P18 onto respective receiving means 24 of the cooling unit 22. After the cooling step is finished, the mould elements 3 may again be transferred to the transport means 25 or may be directly transferred to a conveyor belt etc.

In both embodiments according to figs. 5 and 6 the mould elements 3 are transferred separately into and out of the heating unit. The order, in which they are transferred into and out of the heating unit 21 may be the same. This means that each mould element 3 receives the same temperature treatment respectively remains for the same process time in the heating means 21. In case a mould element 3 respectively the building elements needs a shorter or longer heat treatment, the respective mould element may remain shorter or longer in the heating unit 21 than other mould elements 3, so that the transfer order may vary depending on the needed treatment time. This is possible due to the separate mould element transfer.

Finally, fig. 7 shows another layout of a manufacturing arrangement 20. It again comprises in this example four moulds 1, with each mould having a removable mould element 3. For arranging the building material 7 on the respective mould element 3, the building material 7 is arranged close to the respective mould 1 and is for example unwound from respective fiber mat rolls etc., while the binding agent is applied from respective hoppers or the like.

In this embodiment, a transport means 18 in form of a fork lift is provided between the two rows of moulds 1. This transport means 16 respectively fork lift is adapted to take a loaded mould element 3 and to transport it to the heating means 21, as shown by the arrow P19. From the heating means 21 the mould element 3 is then transferred to the cooling means 22, from where it is then further processed as described.

The empty mould element 3 is then returned by another transport means 25 like a fork lift after cleaning the surface of the mould element 3 for replacing it on a mould carrier 2.

This figure also shows the various rails 18, on which the transport means 25 moves, wherein this rails 18 may also be used by respective transport cars 29 used for distributing the building material.

Although the present invention has been described in detail with reference to the preferred embodiment, the present invention is not limited by the disclosed examples from which the skilled person is able to derive other variations without departing from the scope of the invention.

## Claims

1. Method for manufacturing preforms for a wind turbine blade, with the steps:
- Providing a mould (1) and arranging a preform building material (7) on a transferable mould element (3) removably arranged on a mould carrier (2),
- Fixating the preform building material (7) on the mould element (3),
- Removing the mould element (3) with the fixated preform building material (7) from the mould carrier (2) and transferring it into a heating means (21),
- Heating the preform building material (7) for producing the preform,
- Removing the mould element (3) with the preform from the heating means (21) and cooling the preform.

2. Method according to claim 1, **characterised in that** a mould (1) is used comprising a mould carrier (2) with a removable stiff tray-like mould element (3) providing a mould surface (6) on which the building material (7) is arranged.

3. Method according to claim 1 or 2, **characterised in that** the or several mould elements (3) with the fixated preform building material (7) is or are transferred from the mould carrier (2) to a, preferably rack-like, mould transport means (16) and either stored in the transport means (16) until it is transported with the transport means to the heating means (21) or directly transported with the transport means (16) to the heating means (21).

4. Method according to claim 3, **characterised in that** the transport means (16) moves from a first mould carrier (2, 2a) for receiving a first mould element (3a) to one or more further mould carriers (2b, 2c) for receiving one or more further mould elements (3b, 3c).

5. Method according claims 3 or 4, **characterised in that** the transport means (16) with one or more mould elements (3) moves into the heating means (21), or that one or more mould elements (3) are moved from the transport means (16) into the heating means (21).

6. Method according to one of the preceding claims, **characterised in that** after the heating the one or more mould elements (3) are removed from the heating means (21) and cooled in ambient air, or are moved into a cooling means (22).

7. Method according to claim 6, **characterised in that**
- the transport means (16) comprising the one or more mould elements (3) is transferred into the cooling means (22),
- or that the one or more mould elements (3) itself are transferred from the heating means (21) onto a transport means (27),
- - wherein the transport means (27) remains in or moves into ambient air for cooling, or
- - wherein the transport means (27) moves to the cooling means (22), wherein either the one or more mould elements (3) are transferred into the cooling means (22) or the transport means (27) moves into the cooling means,
- or the one or more mould elements (3) itself are directly transferred from the heating means (21) into the cooling means (22).

8. Method according to one of claims 1 to 6, **characterised in that** the fixating of the preform building material (7) on the mould element (3) is performed by applying a vacuum, wherein the vacuum is released at the earliest after the heating of the preform building material (7).

9. Manufacturing arrangement for manufacturing preforms for a wind turbine blade, comprising:
- One or more moulds (1, 1a, 1b, 1c) each comprising a mould carrier (2, 2a, 2b, 2c) and one or more mould elements (3, 3a, 3b, 3c, 3d, 3e, 3f, 3g) each adapted to fixedly receive preform building material (7) and removably arrangeable on the mould carrier (2, 2a, 2b, 2c),
- A heating means (21) adapted to receive at least one of the mould elements (3, 3a, 3b, 3c, 3d, 3e, 3f, 3g), with the preform building material (7), removed from the mould carrier (2, 2a, 2b, 2c).

10. Manufacturing arrangement according to claim 9, **characterised in that** each mould element is a stiff tray-like mould element (3, 3a, 3b, 3c, 3d, 3e, 3f, 3g) providing a mould surface (6) adapted to receive the preform building material (7) with the mould carrier (2, 2a,2b, 2c) comprising mould element receiving means (4).

11. Manufacturing arrangement according to claim 9 or 10, **characterised in that** at least one mould element transport means (16) adapted to receive one or more mould elements (3) with the fixated preform building material (7) for transferring the one or more mould elements (3) to the heating means (21) is provided.

12. Manufacturing arrangement according to one of the claims 9 to 11, **characterised in that** the heating means (21) is adapted to receive one or more mould elements (3) itself or to receive the transport means (16) comprising one or more mould elements (3).

13. Manufacturing arrangement according to one of the claims 9 to 12, **characterised in that** a cooling means (22) is provided adapted to receive the one or more mould elements (3) with the heated preforms for cooling them.

14. Manufacturing arrangement according to claim 13, **characterised in that** the cooling means (22) is adapted to receive one or more mould elements (3) itself or to receive a transport means (16) comprising one or more mould elements (3).

15. Manufacturing arrangement according to claim 14, **characterised in that** the transport means (16) is the means previously positioned in the heating means or is a further transport means (27) adapted to receive the one or more mould elements from the heating means (21).

16. Manufacturing arrangement according to one of the claims 11 to 15, wherein the transport means (16) and/or the heating means (21) and/or the cooling means (22) is adapted to receive several mould elements (3) itself, **characterised in that** the transport means (16) and/or the heating means (21) and/or the cooling means (22) comprises vertically movable mould element receiving means (19, 23, 24) for vertically stacking the several mould elements (3).

17. Manufacturing arrangement according to one of the claims 11 to 16, **characterised in that** transfer means (14) for transferring a mould element (3) from the mould carrier (2) to the transport means (16) and/or from the transport means (16) to the heating means (21) and/or from the heating means (21) to the further transport means (27) or the cooling means (22) or from the further transport means (27) to the cooling means (22) are provided.

18. Manufacturing arrangement according to claim 17, **characterised in that** the transfer means (14) comprise pushing means arranged at the mould and/or at the transport means, and/or pulling means arranged at the transport means and/or at the heating means, and/or roller elements (15) arranged at the mould and/or the transport means bearing the mould element.

19. Mould for a manufacturing arrangement according to one of the claims 9 to 18, **characterised by** a mould carrier (2) and at least one interchangeable mould element (3), which mould element (3) is a stiff tray-like mould element (3) providing a mould surface (6) adapted to receive the preform building material (7), wherein the mould carrier (2) comprises mould element receiving means (4), wherein the mould further comprises a transfer means (14) for moving the mould element (3) from the mould carrier (2).

20. Mould according to claim 19, **characterised in that** the transfer means (14) comprises a pushing means and/or rolling elements (15) arranged at the mould carrier.

## Patentansprüche

1. Verfahren zur Fertigung von Vorformlingen für ein Rotorblatt mit Folgenden Schritten:
- Vorsehen einer Form (1) und Anordnen eines vorgeformten Baumaterials (7) auf einem verlagerbaren Formelement (3), das entnehmbar auf einem Formträger (2) angeordnet ist,
- Fixieren des vorgeformten Baumaterials (7) am Formelement (3),
- Entnehmen des Formelements (3) mit dem fixierten vorgeformten Baumaterial (7) aus dem Formträger (2) und Verlagern dessen in eine Heizeinrichtung (21),
- Erwärmen des vorgeformten Baumaterials (7) zur Herstellung des Vorformlings,
- Entnehmen des Formelements (3) mit dem Vorformling aus der Heizeinrichtung (21) und Abkühlen des Vorformlings.

2. Verfahren nach Anspruch 1, **dadurch gekennzeichnet, dass** eine Form (1) verwendet wird, die einen Formträger (2) mit einem entnehmbaren, steifen, schalenartigen Formelement (3) umfasst, der eine Formfläche (6) vorsieht, auf der das Baumaterial (7) angeordnet ist.

3. Verfahren nach Anspruch 1 oder 2, **dadurch gekennzeichnet, dass** das oder mehrere Formelemente (3) mit dem fixierten vorgeformten Baumaterial (7) vom Formträger (2) zu einer, vorzugsweise regalartigen, Formtransporteinrichtung (16) verlagert wird/werden und entweder in der Transporteinrichtung (16) gelagert werden, bis sie mit der Transporteinrichtung zur Heizeinrichtung (21) transportiert werden oder direkt mit der Transporteinrichtung (16) zur Heizeinrichtung (21) transportiert werden.

4. Verfahren nach Anspruch 3, **dadurch gekennzeichnet, dass** sich die Transporteinrichtung (16) von einem ersten Formträger (2, 2a) zur Aufnahme eines ersten Formelements (3a) zu einem oder mehreren weiteren Formträgern (2b, 2c) zur Aufnahme eines oder mehrerer weiterer Formelemente (3b, 3c) bewegt.

5. Verfahren nach Anspruch 3 oder 4, **dadurch gekennzeichnet, dass** sich die Transporteinrichtung (16) mit einem oder mehreren Formelementen (3) in die Heizeinrichtung (21) bewegt oder dass das eine oder die mehreren Formelemente (3) von der Transporteinrichtung (16) in die Heizeinrichtung (21) bewegt werden.

6. Verfahren nach einem der vorstehenden Ansprüche, **dadurch gekennzeichnet, dass** nach dem Erwärmen das eine oder die mehreren Formelemente (3) aus der Heizeinrichtung (21) entnommen und bei Umgebungsluft abgekühlt werden oder in eine Kühleinrichtung (22) bewegt werden.

7. Verfahren nach Anspruch 6, **dadurch gekennzeichnet, dass**
- die Transporteinrichtung (16), die das eine oder die mehreren Formelemente (3) umfasst, in die Kühleinrichtung (22) verlagert wird,
- oder dass das eine oder die mehreren Formelemente (3) selbst von der Heizeinrichtung (21) auf eine Transporteinrichtung (27) verlagert werden,
- wobei die Transporteinrichtung (27) zum Abkühlen in der Umgebungsluft bleibt oder sich dorthin bewegt oder
- wobei sich die Transporteinrichtung (27) zur Kühleinrichtung (22) bewegt, wobei entweder das eine oder die mehreren Formelemente (3) in die Kühleinrichtung (22) verlagert werden oder sich die Transporteinrichtung (27) in die Kühleinrichtung bewegt
- oder wobei das eine oder die mehreren Formelemente (3) selbst von der Heizeinrichtung (21) in die Kühleinrichtung (22) verlagert werden.

8. Verfahren nach einem der Ansprüche 1 bis 6, **dadurch gekennzeichnet, dass** die Fixierung des vorgeformten Baumaterials (7) am Formelement (3) durch Aufbringen eines Vakuums durchgeführt wird, wobei das Vakuum frühestens nach dem Erwärmen des vorgeformten Baumaterials (7) abgelassen wird.

9. Fertigungsanordnung zur Fertigung von Vorformlingen eines Rotorblatts, Folgendes umfassend:
- eine oder mehrere Formen (1, 1a, 1b, 1c), die jeweils einen Formträger (2, 2a, 2b, 2c) und ein oder mehrere Formelemente (3, 3a, 3b, 3c, 3d, 3e, 3f, 3g), die jeweils dazu eingerichtet sind, ein vorgeformtes Baumaterial (7) fest aufzunehmen, und entnehmbar auf dem Formträger (2, 2a, 2b, 2c) angeordnet sind, umfassen,
- eine Heizeinrichtung (21), die dazu eingerichtet ist, mindestens eines der Formelemente (3, 3a, 3b, 3c, 3d, 3e, 3f, 3g) aufzunehmen, wobei das vorgeformte Baumaterial (7) aus dem Formträger (2, 2a, 2b, 2c) entnommen ist.

10. Fertigungsanordnung nach Anspruch 9, **dadurch gekennzeichnet, dass** jedes Formelement ein steifes, schalenartiges Formelement (3, 3a, 3b, 3c, 3d, 3e, 3f, 3g) ist, das eine Formfläche (6) vorsieht, die dazu eingerichtet ist, das vorgeformte Baumaterial (7) mit dem eine Formelementaufnahmeeinrichtung (4) umfassenden Formträger (2, 2a,2b, 2c) aufzunehmen.

11. Fertigungsanordnung nach Anspruch 9 oder 10, **dadurch gekennzeichnet, dass** mindestens eine Formelementtransporteinrichtung (16), die dazu eingerichtet ist, ein oder mehrere Formelemente (3) mit dem fixierten vorgeformten Baumaterial (7) zum Verlagern des einen oder der mehreren Formelemente (3) zur Heizeinrichtung (21) aufzunehmen, vorgesehen ist.

12. Fertigungsanordnung nach einem der Ansprüche 9 bis 11, **dadurch gekennzeichnet, dass** die Heizeinrichtung (21) dazu eingerichtet ist, ein oder mehrere Formelemente (3) selbst aufzunehmen oder die Transporteinrichtung (16) aufzunehmen, die ein oder mehrere Formelemente (3) umfasst.

13. Fertigungsanordnung nach einem der Ansprüche 9 bis 12, **dadurch gekennzeichnet, dass** eine Kühleinrichtung (22) vorgesehen ist, die dazu eingerichtet ist, das eine oder die mehreren Formelemente (3) mit den erwärmten Vorformlingen zum Kühlen aufzunehmen.

14. Fertigungsanordnung nach Anspruch 13, **dadurch gekennzeichnet, dass** die Kühleinrichtung (22) dazu eingerichtet ist, ein oder mehrere Formelemente (3) selbst aufzunehmen oder eine Transporteinrichtung (16) aufzunehmen, die ein oder mehrere Formelemente (3) umfasst.

15. Fertigungsanordnung nach Anspruch 14, **dadurch gekennzeichnet, dass** die Transporteinrichtung (16) die Einrichtung ist, die zuvor in der Heizeinrichtung positioniert war, oder eine weitere Transporteinrichtung (27) ist, die dazu eingerichtet ist, das eine oder die mehreren Formelemente von der Heizeinrichtung (21) aufzunehmen.

16. Fertigungsanordnung nach einem der Ansprüche 11 bis 15, wobei die Transporteinrichtung (16) und/oder die Heizeinrichtung (21) und/oder die Kühleinrichtung (22) dazu eingerichtet ist, mehrere Formelemente (3) selbst aufzunehmen, **dadurch gekennzeichnet, dass** die Transporteinrichtung (16) und/oder die Heizeinrichtung (21) und/oder die Kühleinrichtung (22) eine vertikal bewegliche Formelementaufnahmeeinrichtung (19, 23, 24) zum vertikalen Stapeln der mehreren Formelemente (3) umfasst.

17. Fertigungsanordnung nach einem der Ansprüche 11 bis 16, **dadurch gekennzeichnet, dass** eine Verlagerungseinrichtung (14) zum Verlagern eines Formelements (3) vom Formträger (2) zur Transporteinrichtung (16) und/oder von der Transporteinrichtung (16) zur Heizeinrichtung (21) und/oder von der Heizeinrichtung (21) zur weiteren Transporteinrichtung (27) oder zur Kühleinrichtung (22) oder von der weiteren Transporteinrichtung (27) zur Kühleinrichtung (22) vorgesehen ist.

18. Fertigungsanordnung nach Anspruch 17, **dadurch gekennzeichnet, dass** die Verlagerungseinrichtung (14) eine Schubeinrichtung, die an der Form und/oder an der Transporteinrichtung angeordnet ist, und/oder eine Zugeinrichtung, die an der Transporteinrichtung und/oder an der Heizeinrichtung angeordnet ist, und/oder Rollelemente (15), die an der Form und/oder an der das Formelement tragenden Transporteinrichtung angeordnet sind, umfasst.

19. Form für eine Fertigungsanordnung nach einem der Ansprüche 9 bis 18, **gekennzeichnet durch** einen Formträger (2) und mindestens ein austauschbares Formelement (3), wobei das Formelement (3) ein steifes, schalenartiges Formelement (3) ist, das eine Formfläche (6) vorsieht, die dazu eingerichtet ist, das vorgeformte Baumaterial (7) aufzunehmen, wobei der Formträger (2) eine Formelementaufnahmeeinrichtung (4) umfasst, wobei die Form ferner eine Verlagerungseinrichtung (14) zum Bewegen des Formelements (3) vom Formträger (2) umfasst.

20. Form nach Anspruch 19, **dadurch gekennzeichnet, dass** die Verlagerungseinrichtung (14) eine Schubeinrichtung und/oder Rollelemente (15) umfasst, die am Formträger angeordnet sind.

## Revendications

1. Procédé de fabrication de préformes pour une pale d'éolienne, comprenant les étapes de :
- fourniture d'un moule (1) et agencement d'un matériau de fabrication de préforme (7) sur un élément de moule transférable (3) agencé de façon détachable sur un support de moule (2),
- fixation du matériau de fabrication de préforme (7) sur l'élément de moule (3),
- enlèvement de l'élément de moule (3) comportant le matériau de fabrication de préforme fixé (7) du support de moule (2) et transfert de celui-ci dans un moyen de chauffage (21),
- chauffage du matériau de fabrication de préforme (7) pour produire la préforme,
- enlèvement de l'élément de moule (3) comportant la préforme du moyen de chauffage (21) et refroidissement de la préforme.

2. Procédé selon la revendication 1, **caractérisé en ce qu'**un moule (1) est utilisé comprenant un support de moule (2) avec un élément de moule (3) semblable à un plateau rigide amovible, fournissant une surface de moule (6) sur laquelle est agencé le matériau de fabrication (7).

3. Procédé selon la revendication 1 ou 2, **caractérisé en ce que** le ou plusieurs élément(s) de moule (3) comportant le matériau de fabrication de préforme fixé (7) est ou sont transféré(s) du support de moule (2) à un moyen de transport de moule (16), de préférence semblable à une étagère, et soit stocké(s) dans le moyen de transport (16) jusqu'à ce qu'il soit transporté avec le moyen de transport au moyen de chauffage (21), soit directement transporté avec le moyen de transport (16) au moyen de chauffage (21).

4. Procédé selon la revendication 3, **caractérisé en ce que** le moyen de transport (16) se déplace d'un premier support de moule (2, 2a) pour recevoir un premier élément de moule (3a) à un ou plusieurs autres supports de moule (2b, 2c) pour recevoir un ou plusieurs éléments de moule (3b, 3c).

5. Procédé selon les revendications 3 ou 4, **caractérisé en ce que** le moyen de transport (16) avec un ou plusieurs éléments de moule (3) se déplace dans le moyen de chauffage (21), ou **en ce qu'**un ou plusieurs éléments de moule (3) sont déplacés du moyen de transport (16) dans le moyen de chauffage (21).

6. Procédé selon l'une des revendications précédentes, **caractérisé en ce qu'**après le chauffage, l'un ou plusieurs éléments de moule (3) sont enlevés du moyen de chauffage (21) et refroidis à l'air ambiant, ou sont déplacés dans un moyen de refroidissement (22).

7. Procédé selon la revendication 6, **caractérisé en ce que**
- le moyen de transport (6) comprenant le ou plusieurs éléments de moule (3) est transféré dans le moyen de refroidissement (22),
- ou **en ce que** le ou plusieurs éléments de moule (3) lui-même sont transférés du moyen de chauffage (21) sur un moyen de transport (27),
- - dans lequel le moyen de transport (27) reste dans ou se déplace dans l'air ambiant pour refroidir, ou
- - dans lequel le moyen de transport (27) se déplace vers le moyen de refroidissement (22), dans lequel soit le ou plusieurs éléments de moule (3) sont transférés dans le moyen de refroidissement (22), soit le moyen de transport (27) se déplace dans le moyen de refroidissement,
- ou le ou plusieurs éléments de moule (3) lui-même sont directement transférés du moyen de chauffage (21) dans le moyen de refroidissement (22).

8. Procédé selon l'une des revendications 1 à 6, **caractérisé en ce que** la fixation du matériau de fabrication de préforme (7) sur l'élément de moule (3) est réalisée en appliquant un vide, dans lequel le vide est relâché au plus tôt après le chauffage du matériau de fabrication de préforme (7).

9. Agencement de fabrication pour fabriquer des préformes pour une pale d'éolienne, comprenant :
- un ou plusieurs moules (1, 1a, 1b, 1c) comprenant chacun un support de moule (2, 2a, 2b, 2c) et un ou plusieurs éléments de moule (3, 3a, 3b, 3c, 3d, 3e, 3f, 3g) adaptés chacun pour recevoir fixement du matériau de fabrication de préforme (7) et agençables de façon amovible sur le support de moule (2, 2a, 2b, 2c) ,
- un moyen de chauffage (21) adapté pour recevoir au moins un des éléments de moule (3, 3a, 3b, 3c, 3d, 3e, 3f, 3g), comportant le matériau de fabrication de préforme (7), enlevé du support de moule (2, 2a, 2b, 2c).

10. Agencement de fabrication selon la revendication 9, **caractérisé en ce que** chaque élément de moule est un élément de moule semblable à un plateau rigide (3, 3a, 3b, 3c, 3d, 3e, 3f, 3g) fournissant une surface de moule (6) adaptée pour recevoir le matériau de fabrication de préforme (7) avec le support de moule (2, 2a, 2b, 2c) comprenant un moyen de réception de l'élément de moule (4).

11. Agencement de fabrication selon la revendication 9 ou 10, **caractérisé en ce qu'**au moins un moyen de transport d'élément de moule (16) adapté pour recevoir un ou plusieurs éléments de moule (3) comportant le matériau de fabrication de préforme fixé (7) est fourni pour transférer le ou plusieurs éléments de moule (3) au moyen de chauffage (21).

12. Agencement de fabrication selon l'une des revendications 9 à 11, **caractérisé en ce que** le moyen de chauffage (21) est adapté pour recevoir un ou plusieurs éléments de moule (3) lui-même ou pour recevoir le moyen de transport (16) comprenant un ou plusieurs éléments de moule (3).

13. Agencement de fabrication selon l'une des revendications 9 à 12, **caractérisé en ce qu'**un moyen de refroidissement (22) est fourni en étant adapté pour recevoir le ou plusieurs éléments de moule (3) avec les préformes chauffées pour les refroidir.

14. Agencement de fabrication selon la revendication 13, **caractérisé en ce que** le moyen de refroidissement (22) est adapté pour recevoir un ou plusieurs élément de moule (3) lui-même ou pour recevoir un moyen de transport (16) comprenant un ou plusieurs éléments de moule (3).

15. Agencement de fabrication selon la revendication 14, **caractérisé en ce que** le moyen de transport (16) est le moyen positionné précédemment dans le moyen de chauffage ou est un autre moyen de transport (27) adapté pour recevoir le ou plusieurs éléments de moule du moyen de chauffage (21).

16. Agencement de fabrication selon l'une des revendications 11 à 15, dans lequel le moyen de transport (16) et/ou le moyen de chauffage (21) et/ou le moyen de refroidissement (22) est adapté pour recevoir plusieurs éléments de moule (3) lui-même, **caractérisé en ce que** le moyen de transport (16) et/ou le moyen de chauffage (21) et/ou le moyen de refroidissement (22) comprend des moyens de réception d'élément de moule mobile verticalement (19, 23, 24) pour empiler verticalement les plusieurs éléments de moule (3).

17. Agencement de fabrication selon l'une des revendications 11 à 16, **caractérisé en ce que** sont fournis des moyens de transfert (14) pour transférer un élément de moule (3) du support de moule (2) au moyen de transport (16) et/ou du moyen de transport (16) au moyen de chauffage (21) et/ou du moyen de chauffage (21) à l'autre moyen de transport (27) ou au moyen de refroidissement (22) ou de l'autre moyen de transport (27) au moyen de refroidissement (22).

18. Agencement de fabrication selon la revendication 17, **caractérisé en ce que** les moyens de transfert (14) comprennent des moyens de poussée agencés au niveau du moule et/ou au niveau des moyens de transport, et/ou des moyens de traction agencés au niveau des moyens de transport et/ou au niveau des moyens de chauffage, et/ou des éléments de roulement (15) agencés au niveau du moule et/ou les moyens de transport portant l'élément de moule.

19. Moule pour un agencement de fabrication selon l'une des revendications 9 à 18, **caractérisé par** un support de moule (2) et au moins un élément de moule interchangeable (3), lequel élément de moule (3) est un élément de moule semblable à un plateau rigide (3) fournissant une surface de moule (6) adaptée pour recevoir le matériau de fabrication de préforme (7), dans lequel le support de moule (2) comprend des moyens de réception d'élément de moule (4), dans lequel le moule comprend, en outre, un moyen de transfert (14) pour déplacer l'élément de moule (3) du support de moule (2).

20. Moule selon la revendication 19, **caractérisé en ce que** le moyen de transfert (14) comprend un moyen de poussée et/ou des éléments de roulement (15) agencés au niveau du support de moule.
